(19) Europäisches Patentamt
European Patent Office
Office européen des brevets

(11) **EP 3 325 564 B1**

(12) **EUROPEAN PATENT SPECIFICATION**

(45) Date of publication and mention
of the grant of the patent:
**08.04.2020 Bulletin 2020/15**

(21) Application number: **15898589.5**

(22) Date of filing: **21.07.2015**

(51) Int Cl.:
***C09D 17/00*** *(2006.01)*

(86) International application number:
**PCT/CN2015/084604**

(87) International publication number:
**WO 2017/012033 (26.01.2017 Gazette 2017/04)**

(54) **AN AQUEOUS COATING COMPOSITION**

WÄSSRIGE BESCHICHTUNGSZUSAMMENSETZUNG

COMPOSITION DE REVÊTEMENT AQUEUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.05.2018 Bulletin 2018/22**

(73) Proprietor: **Rohm and Haas Company
Philadelphia, PA 19106 (US)**

(72) Inventors:
• **WANG, Tao
Collegeville, PA 19426 (US)**
• **LIU, Dan
Shanghai 201203 (CN)**

• **WANG, Tao
Geelong, Victoria 3221 (AU)**

(74) Representative: **Murgitroyd & Company
Murgitroyd House
165-169 Scotland Street
Glasgow G5 8PL (GB)**

(56) References cited:
**WO-A1-2014/097309    WO-A1-2016/172832
WO-A2-2008/064999    CN-A- 1 380 369
CN-A- 102 051 098    JP-A- 2012 092 289
US-A1- 2014 187 706**

**Description**

FIELD OF THE INVENTION

The present invention relates to an aqueous coating composition which may be used as primer coating or topcoat coating in the architecture coating industry.

INTRODUCTION

In the architecture coating industry, it usually requires at least two coating layers for operation: a primer coating layer and a topcoat coating layer. The primer coating layer provides the coating film with alkali/efflorescence resistance, while the topcoat coating layer provides opacity. The two-layer system increases complexity of operations and usually requires a longer operation time.

It is therefore desired to provide a one-layer system for coating operation which requires only one coating layer during operation and provides the coating films uncompromised coating performances compared to the two-layer system.

WO2016172832 (A1) provides an aqueous paint composition comprising by dry weight based on total dry weight of the pigment composition, from 11% to 35% of a polymeric duller of (co) polymeric particles having an average diameter of from 1 to 20µm, and from 25 % to 70 % of titanium dioxide particles; wherein from 50 % to 100 % of the titanium dioxide particles are encapsulated by polymer shell of (co) polymeric particles.

WO2014097309 (A1) discloses stimuli responsive self-cleaning aqueous coating compositions for masonry and other substrates involving coatings that are durable, storage stable, ambient curing and recoatable comprising of smart polymers, which said coatings exhibits reversible super-hydrophobic and super-hydrophilic behaviour in response to external stimuli based variable environmental conditions such as variations in at least one temperature, pH, humidity and light; also exhibiting low contact angle hysteresis of < 25 degrees which reversibly switches to a contact angle hysteresis of > 25 degrees with external stimuli.

WO2008064999 (A2) discloses a microcapsule comprising a core containing a hydrophobic liquid or wax within a polymeric shell, in which solid particles insoluble in the hydrophobic liquid or wax are distributed throughout the core, wherein an oil soluble dispersant polymer is adhered to the surface of the solid insoluble particles.

SUMMARY OF THE INVENTION

The present invention provides an aqueous coating composition comprising, by dry weight based on total dry weight of the coating composition, from 2% to 16% a small-particle-size polymeric dispersion of (co)polymeric particles having an average particle size of from 30 to 90nm, wherein the particles comprise at least one ethylenically unsaturated nonionic monomer selected from methyl methacrylate, ethyl acrylate, butyl acrylate, 2-ethylhexyl acrylate, styrene, and the combinations thereof and less than 10% by dry weight based on total dry weight of the (co)polymeric particles of a stabilizer monomer, and from 25% to 70% titanium dioxide particles; wherein from 50% to 100% of the titanium dioxide particles are encapsulated by a polymer shell of (co)polymeric particles comprising at least one ethylenically unsaturated nonionic monomer selected from methyl methacrylate, ethyl acrylate, butyl acrylate, 2-ethylhexyl acrylate, styrene, and the combinations thereof and less than 10% by dry weight based on total dry weight of the (co)polymeric particles of a stabilizer monomer.

DETAILED DESCRIPTION OF THE INVENTION

As used herein, the term "(co)polymeric" refers to polymeric or co-polymeric.

The present invention provides an aqueous coating composition comprising, by dry weight based on total dry weight of the coating composition, from 2% to 16%, preferably from 3% to 13%, and more preferably from 5% to 10%, a small-particle-size polymeric dispersion of (co)polymeric particles having an average particle size of from 30 to 90nm, preferably from 40 to 80nm, and more preferably from 45 to 70nm; and from 25% to 70%, preferably from 28% to 55%, and more preferably from 30% to 40%, titanium dioxide particles. From 50% to 100%, preferably from 60% to 100%, and more preferably from 70% to 100% by dry weight based on total dry weight of the titanium dioxide particles are encapsulated by a polymer shell of (co)polymeric particles.

Optionally, the aqueous coating composition further comprises a binder component comprising film forming organic (co)polymeric particles.

The (co)polymeric particles

The (co)polymeric particles of the present invention comprise at least one polymerized ethylenically unsaturated nonionic monomer selected from methyl methacrylate, ethyl acrylate, butyl acrylate, 2-ethylhexyl acrylate, styrene, and the combinations thereof and less than 10% by dry weight based on total dry weight of the (co)polymeric particles of a stabilizer monomer.

The (co)polymeric particles may further comprise less than 10%, preferably less than 5%, and more preferably less than 2.5% by dry weight based on total dry weight of the (co)polymeric particles, a stabilizer monomer. Suitable examples of the stabilizer monomers include sodium styrene sulfonate (SSS), sodium vinyl sulfonate (SVS), 2-acrylamido-2-methylpropanesulfonic acid (AMPS), acrylamide (AM), acrylic acid (AA), methacrylic acid (MAA), and itaconic acid (IA).

The (co)polymeric particles may further comprise from 0.1% to 5%, preferably from 0.3% to 4%, and more preferably from 0.5% to 3% by dry weight based on total dry weight of the (co)polymeric particles, an alkoxysilane. The alkoxysilane may be polymerized on or is cold blended with the (co)polymeric particles, and therefore may be polymerizable or non-polymerizable.

The polymerizable alkoxysilanes are ethylenically unsaturated monomers carrying at least one alkoxysilane functionality. Preferably, the alkoxysilane functionality is hydrolysable. Suitable examples of the polymerizable alkoxysilane include vinyltrialkoxysilane; vinyltrimethoxysilane such as alkylvinyldiakoxysilane; (meth)acryloxyalkyltriakoxysilane such as (meth)acryloxyethyltrimethoxysilane and (meth)acryloxypropyltrimethoxysilane; their derivatives and the combinations thereof.

Suitable Examples of the non-polymerizable alkoxysilane include tris-(trimethoxy)silane; octyl triethoxysilane; methyl triethoxysilane; methyl trimethoxysilane; isocyanate silane such as tris-[3-(trimethoxysilyl)propyl]isocyanurate; gamma-mercaptopropyl trimethoxysilane; bis-(3-[triethoxysilyl]propyl)polysulfide; beta-(3,4-epoxycyclohexyl)-ethyl trimethoxysilane; silanes containing epoxy group (epoxy silane), glycidoxy group and/or glycidoxypropyl group such as gamma-glycidoxypropyl trimethoxysilane, gamma-glycidoxypropyl methyldiethoxysilane, (3-glycidoxypropyl)trimethoxy silane, (3-glycidoxypropyl) hexyltrimethoxy silane, and beta-(3,4-epoxycyclohexyl)-ethyltriethoxysilane.

Preferably, the alkoxysilane is polymerizable.

The small-particle-size polymeric dispersion of (co)polymeric particles has a minimum film forming temperature (MFFT) of from -50 to 80°C, preferably from -35 to 60°C, and more preferably from -20 to 50°C.

The polymer shell of (co)polymeric particles encapsulating the titanium dioxide particles has an MFFT of from -50 to 80°C, preferably from -35 to 60°C, and more preferably from -20 to 50°C; and an average particle size of from 200 to 800nm, preferably from 300 to 700nm, and more preferably from 400 to 600nm.

The film forming organic (co)polymeric particles of the binder component have an MFFT of from -50 to 100°C; and an average particle size of from 100 to 500nm, preferably from 110 to 400nm, and more preferably from 120 to 300nm.

Titanium dioxide particles

Any titanium dioxide ($TiO_2$) particles can be used in the coating composition of the present invention. Commercially available titanium dioxide particles include TI-PURE™ R-706 and TI-PURE R-902+ from DuPont. The encapsulation of the polymer shell of (co)polymeric particles on the surface of the titanium dioxide particles can be achieved by polymerization processes. The polymerization processes can be any methods known in the art, including emulsion polymerization, mini-emulsion polymerization, and mechanical dispersing technology.

The coating composition

The coating composition may further comprise other pigments or extenders.

As used herein, the term "pigment" refers to a particulate inorganic material which is capable of materially contributing to the opacity or hiding capability of a coating. Pigments typically have a refractive index of equal to or greater than 1.8 and include zinc oxide, zinc sulfide, barium sulfate, and barium carbonate. For the purpose of clarity, titanium dioxide particles of the present invention are not "pigment" of the present invention.

The term "extender" refers to a particulate inorganic materials having a refractive index of less than or equal to 1.8 and greater than 1.3 and include calcium carbonate, aluminium oxide ($Al_2O_3$), clay, calcium sulfate, aluminosilicate, silicate, zeolite, mica, diatomaceous earth, solid or hollow glass, and ceramic bead. The coating composition may optionally contain solid or hollow polymeric particles having a glass transition temperature (Tg) of greater than 60°C, such polymeric particles are classified as extenders for purposes of pigment volume concentration (PVC) calculations herein. The details of hollow polymeric particles are described in EP 22633, EP 915108, EP 959176, EP 404184, US 5360827, WO 00/68304, and US 20100063171. The solid polymeric particles have particle sizes of from 1 to 50 microns, and preferably from 5 to 20 microns. A suitable example of the polymeric particles is ROPAQUE™ Ultra E opaque polymer commercially available from The Dow Chemical Company. For the purpose of clarity, the polymeric particles of the present invention are different from the first or the second polymer of the present invention. Calcium carbonate, clay, mica, and aluminium oxide ($Al_2O_3$) are preferred extenders.

PVC (pigment volume concentration) of the coating composition is calculated as follows,

$$PVC\ (\%) = [\text{volume of pigment(s)} + \text{volume of extender(s)}] / \text{total dry volume of coating.}$$

In a preferred embodiment, the coating composition has a PVC of from 10% to 75%, and preferably from 20% to 50%.

Preparation of the coating composition

The preparation of the coating composition can be well-known methods of the art and involves the process of admixing appropriate coating ingredients in the indicated proportions to provide coating as well as the final dry coating film with the desired properties.

Application of the coating composition

The coating composition may be applied by conventional application methods such as brushing, roller application, and spraying methods such as air-atomized spray, air-assisted spray, airless spray, high volume low pressure spray, and air-assisted airless spray.

Suitable substrates for coating application include concrete, cement board, medium-density fiberboard (MDF) and particle board, gypsum board, wood, stone, metal, plastics, wall paper and textile, etc. Preferably, all the substrates are pre-primed by waterborne or solvent-borne primers.

EXAMPLES

I. Raw materials

| Abbreviation | Chemical |
| --- | --- |
| BA | butyl acrylate |
| MMA | methyl methacrylate |
| (M)AA | (methyl)acrylic acid |
| SEM | 2-sulfoethyl methacrylate |
| DMAEMA | 2-(dimethylamino)ethyl methacrylate |
| n-DDM | n-dodecyl mercaptan |
| AIBN | 2,2'-azobis(isobutyronitrile) |
| DS-4 | sodium dodecyl benzene sulfonate |
| EDTA | ethylene diamine tetraacetic acid |
| t-BHP | tert-butyl hydroperoxide |
| SLS | sodium lauryl sulfate |
| SPS | sodium persulfate |
| EUM | ethylene ureaethyl methacrylate |

| Chemical | Supplier |
| --- | --- |
| FOAMASTER™ NXZ defoamer | BASF Company |
| TEGO™ Foamex 825 defoamer | Evonik Industries |

(continued)

| Chemical | Supplier |
|---|---|
| AMP-95™ base | The Dow Chemical Company |
| OROTAN™ 731A dispersant | The Dow Chemical Company |
| TRITON™ EF-106 wetting agent | The Dow Chemical Company |
| ACRYSOL™ SCT-275 rheology modifier | The Dow Chemical Company |
| ACRYSOL™ RM-2020 rheology modifier | The Dow Chemical Company |
| TI-PURE™ R-706 $TiO_2$ | DuPont Company |
| OMYACARB™ 2 extender | Guangfu Building Materials Group (China) |
| DB-80 extender | Guangfu Building Materials Group (China) |
| TEXANOL™ coalescent | The Dow Chemical Company |
| ROPAQUE™ Ultra E opaque polymer | The Dow Chemical Company |

II. Test procedures

1. Opacity determination

Drawdown of Coating Compositions was made with a $150\mu m$ Bird Film Applicator™ on a BYKO-chart PA-2810 of BYK-Gardner GmbH, and was then allowed for drying for 1 day in a constant temperature room (CTR). Contrast ratio of dry coating was determined by a BYK-Gardner 6850 Color-Guide Plus Spectrophotometer. Contrast ratio is a test method for the opacity of coating film, Y values of coating film were tested separately in the white chart ($Y_w$) and black chart ($Y_b$). Contrast ratio was defined as $Y_b/ Y_w$. The higher the contrast ratio, the better the opacity is.

2. Alkali/Efflorescence Resistance

$80\mu$ Coating Composition was applied with a brush on one side of a 150mm×70mm×4-6mm fibre reinforced mid-density cement flat panel from Tianjin Weida testing machine factory, and then allowed for drying for 6 days in a CTR. On the 6th day, 0.5g iron blue solution (20wt% in 2% polyvinyl alcohol solution) was applied on the surface of the panel with brush and allowed for drying it for another day. The periphery of the panel was covered with wax. The test panels were placed in a container containing 2% sodium hydroxide solution, 5% sodium sulfate solution, and 0.12% calcium hydroxide solution in water. The side applied with the Coating Composition was not dipped into the solutions, while the side without the Coating Composition was dipped into the solutions and had direct contact with the solutions. The panels were removed after exposure for 3 days, and were dried in the CTR for 24 hours and were observed for alkali burn.

Alkali/Efflorescence resistance was evaluated according to the ranking standard described in Table 1.

TABLE 1 Ranking Standard for Alkali Burn Performance

| Alkali/Efflorescence resistance ranking | Alkali Burn Scale |
|---|---|
| 10 | none |
| 9 | trace |
| 8 | trace to slight |
| 7 | slight |
| 6 | slight to moderate |
| 5 | moderate |
| 4 | moderate to heavy |
| 3 | heavy |
| 2 | heavy to very heavy |

(continued)

| Alkali/Efflorescence resistance ranking | Alkali Burn Scale |
|---|---|
| 1 | very heavy |

III. Experimental examples

1. Preparation for the dispersion of polymer shell encapsulating the titanium dioxide particles (Polymer-TiO$_2$ Dispersion)

A 250ml flask equipped with a magnetic stirrer, an N$_2$-inlet, a reflux condenser, a heating mantel, and a thermocouple was charged with 20g of SEM, 4g of DMAEMA, 10g of BA, 16g of MMA, 1.1g of n-DDM, 0.5g of AIBN, and 100g of n-propanol. The flask was purged with N$_2$, and heated to 80°C for 3 hours. The temperature was then raised to 93°C, and 0.25g of AIBN in 2.0g n-propanol was added. The temperature was held at 93°C for 1 hour; then the flask was cooled to room temperature. The product was poured into 100ml of hexane, and was dried. The dried product was dissolved in sufficient water and NH$_3$ to make a 21.3% solution at pH 5.0 to prepare a dispersant polymer.
A steel grind pot was charged with 31.7g of the dispersant polymer and 95.2g of water. 450g TI-PURE™ R-706 TiO$_2$ was added slowly while grinding at 2000rpm using a Model 50 lab dispersator from Netzsch company equipped with a disk blade. The mixture was ground for 20min, and then an additional 11.3g of water was added to make a 76.5% TI-PURE R-706 TiO$_2$ slurry.
A one gallon four-neck round-bottom flask equipped with a paddle stirrer, an N$_2$-inlet condenser, a heating mantel, and a thermocouple was charged with 1816g of the slurry along with a solution of 13.81g DS-4 (23% solids) in 251.05g DI water. The flask was purged with N$_2$, and heated to 30°C. Then 50g 0.1% iron sulfate and 4g 1% EDTA were added into the reactor. Two minutes later, co-feed #1 consisting of 2g t-BHP dissolved in 110.53g DI water and co-feed #2 consisting of 8.28g IAA dissolved in 96.25g DI water were fed to the reactor. Two minutes after the addition of the co-feed solutions, a first monomer emulsion (ME1) prepared previously by mixing 56.52g DI water, 6.9g DS-4, and 261.67g monomers (45.6% BA, 53.4% MMA and 1.0% MAA) was fed to the reactor. Then, a second monomer emulsion (ME2) prepared by mixing 269.5g DI water, 20.71g DS-4, and 779.5g monomers (45.6% BA, 53.4% MMA and 1.0% MAA) was fed to the reactor. Reaction continued for another 20min. The contents of the reactor were then cooled to room temperature, followed by feeding 84g NaOH solution (6% solids) in 40min. Small amounts of gel were filtered by a 100 mesh filter. The remainder was the dispersion of polymer encapsulated titanium dioxide particles. The dispersion comprised 33% titanium dioxide particles, 26% polymer shell of (co)polymeric particles, and water.

2. Preparation for the small-particle-size polymeric dispersion of (co)polymeric particles

67.66g of 28wt% SLS solution, 4.48g Na$_2$CO$_3$ in 14.71g DI water and 1052.94g of DI water were charged to a five-liter multi-neck flask equipped with a mechanical stirrer and were heated to 88°C under a nitrogen atmosphere. A monomer emulsion was prepared by combining and emulsifying with stirring 583.72g of BA, 670.94g of MMA, 12.88g of MAA, 464.71g of DI Water, and 9.89g 28wt% SLS solution. 44.50g of the monomer emulsion was added to the flask, and was followed by 2.63g SPS in 14.74g DI water. The remaining monomer emulsion and a solution of 1.12g SPS in 76.47g DI water were then added to the flask respectively over 75 minutes while the reactor temperature was maintained at 86 to 88°C. During the above process, 25.29g EUM in 17.65g DI water was further added over the last 33 minutes. Then, 50g of DI water was used to rinse the emulsion feed line to the reactor. The reaction mixture was then cooled down to room temperature. During cooling, 0.0038g of ferrous sulfate mixed with 0.0038g of EDTA in 3.6g DI water followed by 0.55g of t-BHP (70%) and 0.39g of isoascorbic acid in aqueous solutions were added into the flask. The obtained dispersion was neutralized to a pH of 7.0 to 8.0 with KOH solution. The particle size of this polymeric dispersion is 57nm as measured by a Brookhaven BI 90 particle size analyzer.

3. Preparation for film forming organic polymer binder of (co)polymeric particles

The preparation process of the film forming organic polymer binder of (co)polymeric particles referred to the preparation process for the small-particle-size polymeric dispersion of (co)polymeric particles. The particle size of this polymer binder is 115nm as measured by a Brookhaven BI 90 particle size analyzer.

4. Preparation of the aqueous coating composition

Comparative Coatings 1 and 2 (Comp. 1 or 2), and Coatings 1, 2, and 3 (Coating 1, 2, or 3) were prepared according to the procedure of Table 2. The Grind ingredients were mixed using a high speed Cowles disperser. The Let-down ingredients were added using a conventional lab mixer.

TABLE 2

| Materials | Coating Compositions | | | | |
|---|---|---|---|---|---|
| | Comp. 1 | Comp. 2 | Coating 1 | Coating 2 | Coatin g 3 |
| | Grind | | | | |
| Water | 80.00 | 62.00 | 62.00 | 62.00 | 62.00 |
| OROTAN 731A dispersant | 7.20 | 7.07 | 7.07 | 7.07 | 7.07 |
| TRITON EF-106 wetting agent | 2.00 | 2.00 | 2.00 | 2.00 | 2.00 |
| FOAMASTER NXZ defoamer | 0.40 | 0.40 | 0.40 | 0.40 | 0.40 |
| TI-PURE R-706 $TiO_2$ | 160.05 | 0.00 | 0.00 | 40.00 | 80.00 |
| OMYACARB 2 extender | 95.00 | 95.00 | 95.00 | 95.00 | 95.00 |
| DB-80 extender | 55.00 | 55.00 | 55.00 | 55.00 | 55.00 |
| | Let-down | | | | |
| Polymer-$TiO_2$ Dispersion | 0 | 448.02 | 448.02 | 336.00 | 224.00 |
| water | 120.00 | 0 | 120.00 | 120.00 | 120.00 |
| Film forming organic polymer binder | 252.20 | 85.40 | 0 | 61.78 | 123.56 |
| Small-particle-size polymeric dispersion | 104.32 | 0 | 104.32 | 104.32 | 104.32 |
| ROPAQUE Ultra E opaque polymer | 50.00 | 50.00 | 50.00 | 50.00 | 50.00 |
| TEXANOL coalescent | 25.00 | 25.00 | 25.00 | 25.00 | 25.00 |
| ACRYSOL SCT-275 rheology modifier | 7.32 | 13.02 | 4.05 | 4.32 | 5.78 |
| ACRYSOL RM-2020 rheology modifier | 8.34 | 8.92 | 4.17 | 9.92 | 8.18 |
| AMP-95 base | 0.18 | 0.22 | 0.74 | 0.17 | 0.17 |
| Water | 32.99 | 147.96 | 22.20 | 27.03 | 37.53 |
| Total | 1000 | 1000 | 1000 | 1000 | 1000 |
| Coating characteristics | | | | | |
| *Total PVC* | *45%* | *45%* | *45%* | *45%* | *45%* |

IV. Results

TABLE 3

| Coatings | | Comp. 1 | Comp. 2 | Coating 1 | Coating 2 | Coating 3 |
|---|---|---|---|---|---|---|
| Small-particle-size polymeric dispersion (%) | | 8.63 | 0 | 8.63 | 8.63 | 8.63 |
| $TiO_2$ particles | Total $TiO_2$ dosage (%) | 32.36 | 32.36 | 32.36 | 32.36 | 32.36 |
| | Un-encapsulated $TiO_2$ (%) | 100 | 0 | 0 | 25 | 50 |
| | Encapsulated $TiO_2$ (%) | 0 | 100 | 100 | 75 | 50 |
| Properties | Contrast ratio | 93.55 | 95.25 | 95.51 | 95.58 | 94.64 |
| | Alkali/efflorescence resistance | 5 | 3 | 9 | 8 | 5 |

% is dry weight percentage based on total dry weight of the coating composition.

As shown in Table 3, Comparative Coating 1 (Comp. 1) comprising small-particle-size polymeric dispersion showed good efflorescence resistance. It is known that the small-particle-size polymeric dispersion provided good penetration into cement, concrete and masonry substrates and thus offered excellent efflorescence resistance. However, it is limited to primer formulation due to stability problem (small-particle-size polymeric dispersion flocculated with unencapsulated $TiO_2$) and resulted in poor opacity as indicated by contrast ratio compared to Coatings 1, 2 and 3.

Comparative Coating 2 (Comp. 2) comprising polymer shell encapsulated titanium dioxide particles showed good opacity. However, as encapsulation formed bigger particle size, the alkali/efflorescence resistance compromised. Comp. 2 had poorer efflorescence resistance compared to Comp. 1 and Coatings 1, 2, and 3.

The small-particle-size polymeric dispersion and polymer shell encapsulated titanium dioxide particles were combined together in one coating formulation, both its alkali/efflorescence resistance and opacity were improved (Coatings 1, 2 and 3 compared to Comparative Coatings 1 and 2). Specifically, the alkali/efflorescence resistances and opacity performances of Inventive Coatings 1 and 2 were significantly improved. The opacity performance of Coating 3 was also significantly improved, and its alkali/efflorescence resistance performance was well maintained (not hurt).

## Claims

1. An aqueous coating composition comprising by dry weight based on total dry weight of the coating composition, from 2% to 16% of a small-particle-size polymeric dispersion of (co)polymeric particles having an average particle size of from 30 to 90nm wherein the particles comprise at least one ethylenically unsaturated nonionic monomer selected from methyl methacrylate, ethyl acrylate, butyl acrylate, 2-ethylhexyl acrylate, styrene, and the combinations thereof and less than 10% by dry weight based on total dry weight of the (co)polymeric particles of a stabilizer monomer, and from 25% to 70% titanium dioxide particles; wherein from 50% to 100% of the titanium dioxide particles are encapsulated by a polymer shell of (co)polymeric particles comprising at least one ethylenically unsaturated nonionic monomer selected from methyl methacrylate, ethyl acrylate, butyl acrylate, 2-ethylhexyl acrylate, styrene, and the combinations thereof and less than 10% by dry weight based on total dry weight of the (co)polymeric particles of a stabilizer monomer.

2. The aqueous coating composition according to Claim 1, further comprising a binder component comprising film forming organic (co)polymeric particles comprising at least one ethylenically unsaturated non-ionic monomer.

3. The aqueous coating composition according to Claim 2 wherein the ethylenically unsaturated nonionic monomers used in the binder are selected from methyl methacrylate, ethyl acrylate, butyl acrylate, 2-ethylhexyl acrylate, styrene, and the combinations thereof.

4. The aqueous coating composition according to any one of Claims 1-3 wherein the stabilizer monomers are selected from sodium styrene sulfonate, sodium vinyl sulfonate, 2-acrylamido-2-methylpropanesulfonic acid, acrylamide, acrylic acid, methacrylic acid, and itaconic acid.

5. The aqueous coating composition according to any one of Claims 1-4 wherein the (co)polymeric particles further comprise from 0.1% to 5% by dry weight based on total dry weight of the (co)polymeric particles of an alkoxysilane.

6. The aqueous coating composition according to Claim 5 wherein the alkoxysilane is hydrolysable.

7. The aqueous coating composition according to any one of Claims 1-6 wherein the small-particle-size polymeric dispersion of (co)polymeric particles has a minimum film forming temperature of from -50 to 80°C.

8. The aqueous coating composition according to any one of Claims 1-7 wherein the polymer shell of (co)polymeric particles encapsulating the titanium dioxide particles has a 10 minimum film forming temperature of from -50 to 80°C, and an average particle size of from 200 to 800nm.

9. The aqueous coating composition according to any one of Claims 1-8 wherein the film forming organic (co)polymeric particles of the binder component have a minimum film forming temperature of from -50 to 100°C, and an average particle size of from 100 to 500nm.

## Patentansprüche

1. Eine wässrige Beschichtungszusammensetzung, beinhaltend, nach Trockengewicht, bezogen auf das Gesamttrockengewicht der Beschichtungszusammensetzung, zu 2 % bis 16 % eine Polymerdispersion mit kleiner Partikelgröße von (Co-)Polymerpartikeln mit einer durchschnittlichen Partikelgröße von 30 nm bis 90 nm, wobei die Partikel mindestens ein ethylenisch ungesättigtes nichtionisches Monomer, das ausgewählt ist aus Methylmethacrylat, Ethylacrylat, Butylacrylat, 2-Ethylhexylacrylat, Styrol und den Kombinationen davon, und zu weniger als 10 % nach Trockengewicht, bezogen auf das Gesamttrockengewicht der (Co-)Polymerpartikel, ein Stabilisatormonomer beinhalten, und zu 25 % bis 70 % Titandioxidpartikel; wobei 50 % bis 100 % der Titandioxidpartikel von einer Polymerhülle aus (Co-)Polymerpartikeln eingekapselt sind, die mindestens ein ethylenisch ungesättigtes nichtionisches Monomer, das ausgewählt ist aus Methylmethacrylat, Ethylacrylat, Butylacrylat, 2-Ethylhexylacrylat, Styrol und den Kombinationen davon, und zu weniger als 10 % nach Trockengewicht, bezogen auf das Gesamttrockengewicht der (Co-)Polymerpartikel, ein Stabilisatormonomer beinhalten.

2. Wässrige Beschichtungszusammensetzung gemäß Anspruch 1, ferner beinhaltend eine Bindemittelkomponente, beinhaltend filmbildende organische (Co-)Polymerpartikel, beinhaltend mindestens ein ethylenisch ungesättigtes nichtionisches Monomer.

3. Wässrige Beschichtungszusammensetzung gemäß Anspruch 2, wobei die in dem Bindemittel verwendeten ethylenisch ungesättigten nichtionischen Monomere ausgewählt sind aus Methylmethacrylat, Ethylacrylat, Butylacrylat, 2-Ethylhexylacrylat, Styrol und den Kombinationen davon.

4. Wässrige Beschichtungszusammensetzung gemäß einem der Ansprüche 1-3, wobei die Stabilisatormonomere ausgewählt sind aus Natriumstyrolsulfonat, Natriumvinylsulfonat, 2-Acrylamido-2-methylpropansulfonsäure, Acrylamid, Acrylsäure, Methacrylsäure und Itaconsäure.

5. Wässrige Beschichtungszusammensetzung gemäß einem der Ansprüche 1-4, wobei die (Co-)Polymerpartikel ferner zu 0,1 % bis 5 % nach Trockengewicht, bezogen auf das Gesamttrockengewicht der (Co-)Polymerpartikel, ein Alkoxysilan beinhalten.

6. Wässrige Beschichtungszusammensetzung gemäß Anspruch 5, wobei das Alkoxysilan hydrolysierbar ist.

7. Wässrige Beschichtungszusammensetzung gemäß einem der Ansprüche 1-6, wobei die Polymerdispersion mit kleiner Partikelgröße aus (Co-)Polymerpartikeln eine minimale Filmbildungstemperatur von -50 °C bis 80 °C aufweist.

8. Wässrige Beschichtungszusammensetzung gemäß einem der Ansprüche 1-7, wobei die Polymerhülle aus (Co-)Polymerpartikeln, die die Titandioxidpartikel einkapselt, eine minimale Filmbildungstemperatur von -50 °C bis 80 °C und eine durchschnittliche Partikelgröße von 200 nm bis 800 nm aufweist.

9. Wässrige Beschichtungszusammensetzung gemäß einem der Ansprüche 1-8, wobei die filmbildenden organischen (Co-)Polymerpartikel der Bindemittelkomponente eine minimale Filmbildungstemperatur von -50 °C bis 100 °C und eine durchschnittliche Partikelgröße von 100 nm bis 500 nm aufweisen.

## Revendications

1. Une composition de revêtement aqueuse comprenant en poids sec rapporté au poids sec total de la composition de revêtement, de 2 % à 16 % d'une dispersion polymérique à petite dimension de particules de particules (co)polymériques ayant une dimension moyenne de particules allant de 30 à 90 nm, les particules comprenant au moins un monomère non ionique éthyléniquement insaturé sélectionné parmi le méthacrylate de méthyle, l'acrylate d'éthyle, l'acrylate de butyle, l'acrylate de 2-éthylhexyle, le styrène, et les combinaisons de ceux-ci et moins de 10 % en poids sec rapporté au poids sec total des particules (co)polymériques d'un monomère stabilisant, et de 25 % à 70 % de particules de dioxyde de titane ; dans laquelle de 50 % à 100 % des particules de dioxyde de titane sont encapsulées par une enveloppe polymère de particules (co)polymériques comprenant au moins un monomère non ionique éthyléniquement insaturé sélectionné parmi le méthacrylate de méthyle, l'acrylate d'éthyle, l'acrylate de butyle, l'acrylate de 2-éthylhexyle, le styrène, et les combinaisons de ceux-ci et moins de 10 % en poids sec rapporté au poids sec total des particules (co)polymériques d'un monomère stabilisant.

2. La composition de revêtement aqueuse selon la revendication 1, comprenant en outre un constituant liant comprenant des particules (co)polymériques organiques filmogènes comprenant au moins un monomère non ionique éthyléniquement insaturé.

**3.** Le composition de revêtement aqueuse selon la revendication 2 dans laquelle les monomères non ioniques éthyléniquement insaturés utilisés dans le liant sont sélectionnés parmi le méthacrylate de méthyle, l'acrylate d'éthyle, l'acrylate de butyle, l'acrylate de 2-éthylhexyle, le styrène, et les combinaisons de ceux-ci.

**4.** La composition de revêtement aqueuse selon l'une quelconque des revendications 1 à 3 dans laquelle les monomères stabilisants sont sélectionnés parmi le styrène sulfonate de sodium, le vinyl sulfonate de sodium, l'acide 2-acrylamido-2-méthylpropanesulfonique, l'acrylamide, l'acide acrylique, l'acide méthacrylique, et l'acide itaconique.

**5.** La composition de revêtement aqueuse selon l'une quelconque des revendications 1 à 4 dans laquelle les particules (co)polymériques comprennent en outre de 0,1 % à 5 % en poids sec rapporté au poids sec total des particules (co)polymériques d'un alcoxysilane.

**6.** La composition de revêtement aqueuse selon la revendication 5 dans laquelle l'alcoxysilane est hydrolysable.

**7.** La composition de revêtement aqueuse selon l'une quelconque des revendications 1 à 6 dans laquelle la dispersion polymérique à petite dimension de particules des particules (co)polymériques a une température de formation de film minimale allant de -50 à 80 °C.

**8.** La composition de revêtement aqueuse selon l'une quelconque des revendications 1 à 7 dans laquelle l'enveloppe polymère de particules (co)polymériques encapsulant les particules de dioxyde de titane a une température de formation de film minimale allant de -50 à 80 °C, et une dimension moyenne de particules allant de 200 à 800 nm.

**9.** La composition de revêtement aqueuse selon l'une quelconque des revendications 1 à 8 dans laquelle les particules (co)polymériques organiques filmogènes du constituant liant ont une température de formation de film minimale allant de -50 à 100 °C, et une dimension moyenne de particules allant de 100 à 500 nm.

**EP 3 325 564 B1**

**Patent documents cited in the description**

- WO 2016172832 A1
- WO 2014097309 A1
- WO 2008064999 A2
- EP 22633 A
- EP 915108 A
- EP 959176 A
- EP 404184 A
- US 5360827 A
- WO 0068304 A
- US 20100063171 A